# EUROPÄISCHE PATENTSCHRIFT

(11) **EP 3 249 279 B1**
(45) Veröffentlichungstag und Bekanntmachung des Hinweises auf die Patenterteilung: **18.07.2018**
(21) Anmeldenummer: 17168559.7
(22) Anmeldetag: 27.04.2017
(51) Int. Cl.: F16L 55/179, F16L 55/26, B08B 9/043, B08B 9/047

(54) **VORRICHTUNG ZUR KANALROHRINSPEKTION UND/ODER KANALROHRSANIERUNG**
DEVICE FOR INSPECTION AND/OR RENOVATION OF PIPELINES
DISPOSITIF D'INSPECTION DE CANALISATIONS ET/OU D'ASSAINISSEMENT DE CANALISATIONS

(30) Priorität: 27.05.2016 DE 102016109841
(43) Veröffentlichungstag der Anmeldung: 29.11.2017
(73) Patentinhaber: IBAK Helmut Hunger GmbH & Co. KG, 24148 Kiel (DE)
(72) Erfinder: Stock, Markus, 24106 Kiel (DE)
(74) Vertreter: Lobemeier, Martin Landolf

(56) Entgegenhaltungen:
- EP-A2- 2 659 990
- DE-A1- 19 745 497
- DE-A1-102010 044 465
- DE-U1- 20 318 292

## Beschreibung

Die Erfindung betrifft eine Vorrichtung zur Kanalrohrinspektion und/oder Kanalrohrsanierung mit einer mit einem Schiebestab verbundenen, endständigen Kopfeinheit, die eine an der Kopfeinheit verschwenkbar gelagerte Inspektions- und/oder Sanierungseinrichtung aufweist.
Derartige Vorrichtungen zur Kanalrohrinspektion und/oder Kanalrohrsanierung sind beispielsweise als offenkundig vorbenutzte Schiebkameras oder als Fräsroboter im Schiebebetrieb bekannt. Die DE 197 45 497 A1 offenbart eine Vorrichtung zum Beobachten und/oder Bearbeiten der Innenwände von Rohren, mit einem schwenkbaren Arm, der mindestens ein Bearbeitungswerkzeug und/oder eine Inspektionseinrichtung trägt und gegenüber der Rohrachse axial drehbar und radial schwenkbar ist.

Das Problem dieser allgemein bekannten Vorrichtungen besteht häufig darin, dass die Bogengängigkeit der Vorrichtung durch die Verwendung eines eine Kamera und/oder ein Fräswerkzeug tragenden Schwenkarms stark eingeschränkt ist.
Aufgabe der Erfindung ist es daher, eine - trotz Verwendung einer schwenkbar gelagerten Inspektions- und/oder Sanierungseinrichtung - bogengängige Vorrichtung zur Kanalrohrinspektion und/oder Kanalrohrsanierung zu schaffen.
Diese Aufgabe wird erfindungsgemäß durch die Vorrichtung mit den Merkmalen von Anspruch 1 gelöst. Die Unteransprüche geben vorteilhafte Ausgestaltungen der Erfindung wieder.
Grundgedanke der Erfindung ist es, die Stirnseite der Kopfeinheit dadurch bogengängig auszugestalten, dass diese eine Wölbung aufweist, die sich beim Schieben der Vorrichtung in das Rohr der Innenkontur eines Rohrbogens anschmiegt und dabei insgesamt in Richtung des Rohrbogenverlaufs abgelenkt wird. Dafür ist es notwendig, dass die Inspektions- und/oder Sanierungseinrichtung, die die Stirnseite der Kopfeinheit wenigstens teilweise verdeckt, also maskiert, in wenigstens eine Position verschwenkt werden kann, in der die stirnseitige Wölbung freigelegt, also unmaskiert, ist.

Erfindungsgemäß ist also eine Vorrichtung zur Kanalrohrinspektion und/oder Kanalrohrsanierung mit einer mit einem Schiebestab verbundenen, endständigen Kopfeinheit, die eine an der Kopfeinheit verschwenkbar gelagerte Inspektions- und/oder Sanierungseinrichtung aufweist, vorgesehen, wobei die Stirnseite der Kopfeinheit eine bogengängige Wölbung aufweist und die Inspektions- und/oder Sanierungseinrichtung durch Verschwenken die Wölbung in einer eingenommen ersten Position maskiert und einer eingenommenen zweiten Position die Wölbung freilegt.
Die Kopfeinheit ist bevorzugt um die Achse des Schiebstabs drehbar gelagert.
Die Wölbung ist bevorzugt im Verhältnis zur Längsachse der Vorrichtung symmetrisch ausgebildet. Die Stirnseite der Kopfeinheit ist sphärisch oder als Kugelsegment ausgebildet, wobei die Kopfeinheit selbst insgesamt näherungsweise als Kugel ausgebildet ist.
Die Inspektions- und/oder Sanierungseinrichtung weist dabei insbesondere einen beidseits der Wölbung gelagerten Gabelarm auf, wobei die Inspektions- und/oder Sanierungseinrichtung speziell ein am Gabelarm mittig angeordnetes Werkzeug zur Inspektion und/oder Sanierung aufweist.
Die Erfindung wird im Folgenden anhand eines in den beigefügten Zeichnungen dargestellten, besonders bevorzugt ausgestalteten Ausführungsbeispiels näher erläutert. Es zeigen:
- Fig. 1: eine schematische Ansicht eines besonders bevorzugten Ausführungsbeispiels in einem Kanalrohr vor einem Rohrbogen;
- Fig. 2: eine schematische Ansicht des besonders bevorzugten Ausführungsbeispiels im Kanalrohr beim Vorschub in den Rohrbogen;
- Fig. 3: eine schematische Ansicht des besonders bevorzugten Ausführungsbeispiels im Kanalrohr beim Vorschub durch den Rohrbogen; und
- Fig. 4: eine schematische Ansicht des besonders bevorzugten Ausführungsbeispiels im Kanalrohr nach dem Vorschub durch den Rohrbogen.

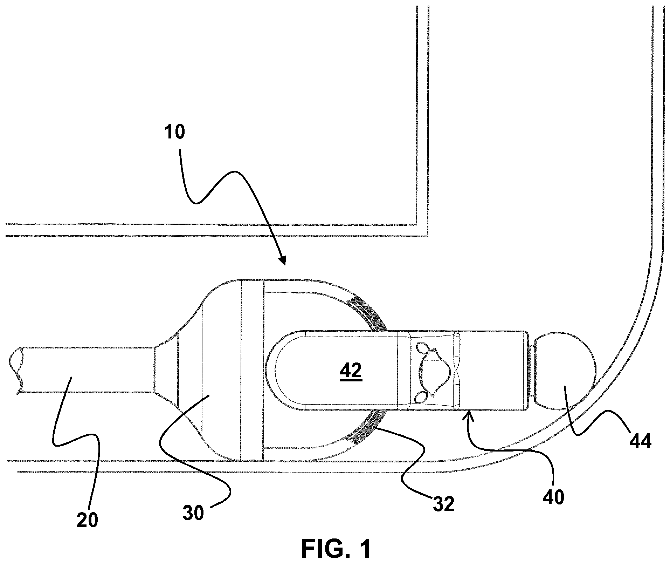

Fig. 1 zeigt eine schematische Ansicht eines besonders bevorzugten Ausführungsbeispiels in einem Kanalrohr vor einem Rohrbogen.

Insbesondere zeigt Fig. 1 eine in einem Kanalrohr eingebrachte Vorrichtung 10 zur Kanalrohrinspektion und/oder Kanalrohrsanierung mit einer mit einem Schiebestab 20 verbundenen, endständigen Kopfeinheit 30, die eine an der Kopfeinheit 30 verschwenkbar gelagerte Inspektions- und/oder Sanierungseinrichtung 40 aufweist.

Der Schiebestab 20 ist insbesondere als Bestandteil eines mit einem Kamerakabel ausgerüsteten Führungsschlauchs ausgebildet.

Die dargestellte Vorrichtung 10 ist insbesondere als Sanierungseinheit ausgebildet und weist einen an der Kopfeinheit 30 verschwenkbar gelagerten Arm 42 auf, an dessen Ende ein Fräswerkzeug 44 angeordnet ist, wobei Fig. 1 eine Position des Arms 42 aufweist, in der der Arm 44 über die Stirnseite der Kopfeinheit 30 hinausragt und die Wölbung 32 der Kopfeinheit - insbesondere bei Ausgestaltung des Arms 42 als Gabelarm - jedenfalls abschnittsweise verdeckt.

Diese Maskierung der Wölbung 32 durch die Inspektions- und/oder Sanierungseinrichtung 40 führt dazu, dass die im Verhältnis zur Längsachse der Vorrichtung 10 symmetrisch ausgebildete Wölbung 32 in Bezug auf die Bogengängigkeit der Vorrichtung 10 funktionslos ist.

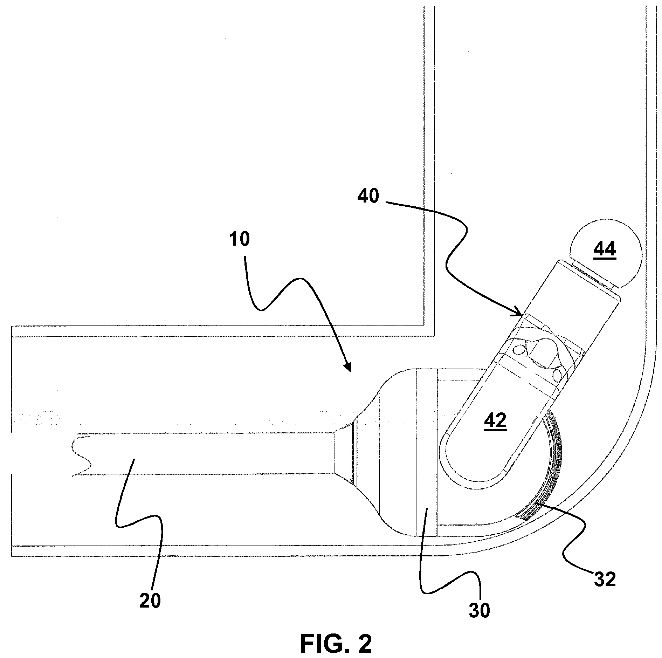

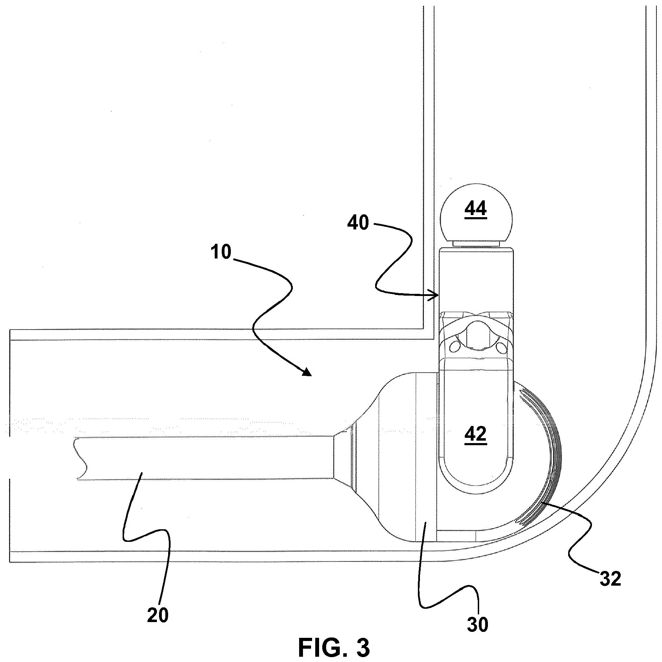

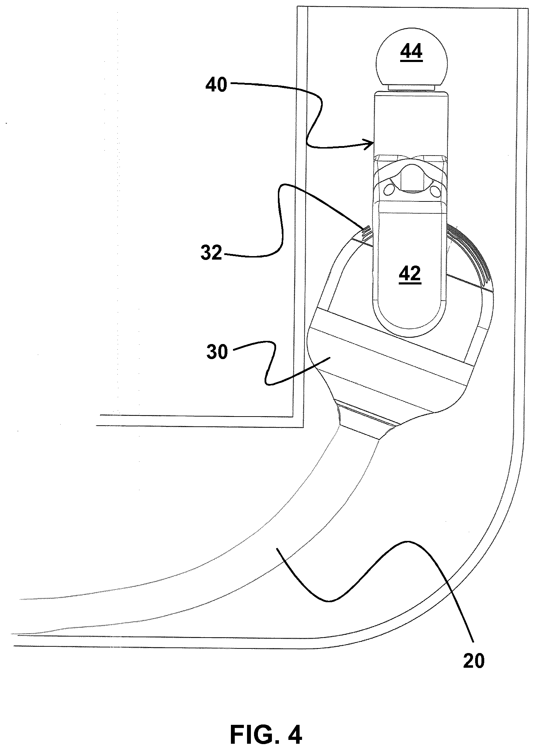

Um eine Bogengängigkeit der Vorrichtung 10 zu erreichen, wird die Inspektions- und/oder Sanierungseinrichtung 40 beim Vorschub der Vorrichtung 10 in den Rohrbogen - wie in Fig. 2 gezeigt - (aktiv oder passiv) derart verschwenkt, dass die stirnseitige Wölbung 32 der Kopfeinheit 30 jedenfalls soweit freigelegt wird, dass die Wölbung 32 an der Rohrwandung des Rohrbogens zu liegen kommen und eine Umlenkung der Vorrichtung 10 bewirken kann. Wie Fig. 3 zeigt, kann die Inspektions- und/oder Sanierungseinrichtung 40 so weit verschwenkt werden, dass die Wölbung 32 vollständig frei liegt und die Inspektions- und/oder Sanierungseinrichtung 40 die Funktion der Wölbung 32 bzw. die Bogengängikeit der Vorrichtung 10 nicht behindert.
Schließlich zeigt Fig. 4 die Vorrichtung 10 nach Passage des Rohrbogens mit annähernd linear zur Kopfeinheit 30 ausgerichteten Inspektions- und/oder Sanierungseinrichtung 40.

## Patentansprüche

1. Vorrichtung (10) zur Kanalrohrinspektion und/oder Kanalrohrsanierung mit einer mit einem Schiebestab (20) verbundenen, endständigen Kopfeinheit (30), die eine an der Kopfeinheit (30) verschwenkbar gelagerte Inspektions- und/oder Sanierungseinrichtung (40) aufweist,
wobei
die Stirnseite der Kopfeinheit (30) eine bogengängige Wölbung (32) aufweist, und die Inspektions- und/oder Sanierungseinrichtung (40) durch Verschwenken zur Einnahme einer die Wölbung (32) maskierenden ersten Position und einer die Wölbung (32) freilegenden zweiten Position eingerichtet ist, wobei die Wölbung (32) sphärisch oder als Kugelsegment ausgebildet ist,
**dadurch gekennzeichnet, dass**
die Kopfeinheit selbst insgesamt näherungsweise als Kugel ausgebildet ist, wobei die Inspektions- und/oder Sanierungseinrichtung (40) einen beidseits der Wölbung (32) gelagerten Gabelarm (42) aufweist,
wobei die Inspektions- und/oder Sanierungseinrichtung (40) so weit verschwenkt werden kann, dass die Wölbung (32) vollständig frei liegt und die Inspektions- und/oder Sanierungseinrichtung (40) die Funktion der Wölbung (32) und die Bogengängigkeit der Vorrichtung (10) nicht behindert.

2. Vorrichtung (10) nach Anspruch 1, **dadurch gekennzeichnet, dass** die Wölbung (32) im Verhältnis zur Längsachse der Vorrichtung (10) symmetrisch ausgebildet ist.

3. Vorrichtung (10) nach einem der vorhergehenden Ansprüche, **dadurch gekennzeichnet, dass** die Wölbung (32) als Kuppel ausgebildet ist.

4. Vorrichtung (10) nach Anspruch 1, **dadurch gekennzeichnet, dass** die Inspektions- und/oder Sanierungseinrichtung (40) ein am Gabelarm (42) mittig angeordnetes Werkzeug (44) zur Inspektion und/oder Sanierung aufweist.

## Claims

1. Device (10) for inspecting and/or renovating sewage pipes, said device comprising a head unit (30) which is connected at the end of a push rod (20) and has an inspection and/or renovation means (40) pivotally mounted on the head unit (30), the end face of the head unit (30) having an arcuate curved region (32), and the inspection and/or renovation means (40) being designed to adopt, by means of pivoting, a first position that conceals the curved region (32) and a second position that exposes the curved region (32), the curved region (32) being spherical or in the form of a spherical segment,
**characterized in that**
the head unit itself is overall approximately in the form of a sphere, the inspection and/or renovation means (40) having a fork arm (42) mounted on either side of the curved region (32), it being possible for the inspection and/or renovation means (40) to be pivoted so far that the curved region (32) is completely exposed and the inspection and/or renovation means (40) does not impede the function of the curved region (32) and the arcuate nature of the device (10).

2. Device (10) according to claim 1, **characterized in that** the curved region (32) is symmetrical relative to the longitudinal axis of the device (10).

3. Device (10) according to either of the preceding claims, **characterized in that** the curved region (32) is in the form of a dome.

4. Device (10) according to claim 1, **characterized in that** the inspection and/or renovation means (40) has a tool (44) arranged centrally on the fork arm (42) for carrying out inspection and/or renovation.

## Revendications

1. Dispositif (10) servant à l'inspection de canalisation et/ou à la rénovation de canalisation, comprenant une unité de tête terminale (30) reliée à une tige de poussée (20) et comportant un moyen d'inspection et/ou de rénovation (40) montée de façon pivotante sur l'unité de tête (30), le côté frontal de l'unité de tête (30) comportant une partie bombée en arc (32) et le moyen d'inspection et/ou de rénovation (40) étant apte à pivoter pour occuper une première position masquant la partie bombée (32) et une seconde position dégageant la partie bombée (32), la partie bombée (32) ayant la forme d'une sphère ou d'un segment sphérique,
**caractérisé en ce que**
l'unité de tête elle-même a dans l'ensemble à peu près la forme d'une sphère, le moyen d'inspection et/ou de rénovation (40) comporte un bras de fourche (42) monté de chaque côté de la partie bombée (32), le moyen d'inspection et/ou de rénovation (40) pouvant pivoter jusqu'à ce que la partie bombée (32) se trouve complètement dégagée et le moyen d'inspection et/ou de rénovation (40) ne gênant pas la fonction de la partie bombée (32) et la capacité d'incurvation du dispositif (10).

2. Dispositif (10) selon la revendication 1, **caractérisé en ce que** la partie bombée (32) est réalisée de manière symétrique par rapport à l'axe longitudinal du dispositif (10).

3. Dispositif (10) selon l'une des revendications précédentes, **caractérisé en ce que** la partie bombée (32) est réalisée sous la forme d'un dôme.

4. Dispositif (10) selon la revendication 1, **caractérisé en ce que** le moyen d'inspection et/ou de rénovation (40) comporte un outil (44) disposé au milieu sur le bras de fourche (42) et destiné à l'inspection et/ou la rénovation.
